# EUROPÄISCHE PATENTSCHRIFT

(11) **EP 2 855 357 B1**
(45) Veröffentlichungstag und Bekanntmachung des Hinweises auf die Patenterteilung: **13.11.2019**
(21) Anmeldenummer: 13725349.8
(22) Anmeldetag: 23.05.2013
(51) Int. Cl.: C01D 15/04, C01B 25/455

(54) **HERSTELLUNG VON HOCHREINEM LITHIUMFLUORID**
PRODUCTION OF HIGH PURITY LITHIUM FLUORIDE
FABRICATION DE FLUORURE DE LITHIUM TRÈS PUR

(30) Priorität: 25.05.2012 EP 12169563
(43) Veröffentlichungstag der Anmeldung: 08.04.2015
(73) Patentinhaber: LANXESS Deutschland GmbH, 50569 Köln (DE)
(72) Erfinder: BOLL, Matthias, 51061 Köln (DE); EBENBECK, Wolfgang, 51373 Leverkusen (DE); KUCKERT, Eberhard, 51375 Leverkusen (DE)
(86) Internationale Anmeldenummer: PCT/EP2013/060652
(87) Internationale Veröffentlichungsnummer: WO 2013/174938

(56) Entgegenhaltungen:
- CN-A- 101 723 415
- CN-A- 102 030 344
- DE-A1- 19 712 988
- DE-A1- 19 809 420
- US-A1- 2011 200 508
- "Das Lithium" In: HOLLEMAN A F; WIBERG E: "Lehrbuch der Anorganischen Chemie", 1. Januar 1995 (1995-01-01), WALTER DE GRUYTER, BERLIN/NEW YORK, XP008164480, ISBN: 978-3-11-012641-9 Seiten 1149-1158, Seite 1151 - Seite 1152

## Beschreibung

Die vorliegende Erfindung betrifft ein Verfahren zur Herstellung von hochreinem Lithiumfluorid ausgehend von Lithiumcarbonat, sowie Lithiumfluorid mit einer bevorzugten Morphologie.

Lithiumverbindungen wie beispielsweise Lithiumhexafluorophosphat (LiPF₆), und Lithiumtetrafluoroborat (LiBF₄) haben insbesondere als Leitsalze in der Herstellung von leistungsfähigen Akkumulatoren eine hohe industrielle Bedeutung erlangt. Weitere Lithiumverbindungen wie beispielsweise Lithiumhexafluoroarsenat (LiAsF₆) Lithiumhexafluorostibat (LiSbF₆), Lithiumfluorperfluoralkylphosphinate (LiPF(R^{F})₃ und Lithiumdifluorphosphat (LiPO₂F₂) werden derzeit intensiv auf ihre Eignung für den gleichen Zweck untersucht.

Um die Funktionsfähigkeit und Lebensdauer und damit die Qualität solcher Akkumulatoren sicherzustellen, ist es von besonderer Wichtigkeit, dass die eingesetzten Lithiumverbindungen hochrein sind und insbesondere möglichst geringe Anteile an anderen Metallionen wie insbesondere Natrium- oder Kaliumionen sowie möglichst geringe Mengen an korrosivem Chlorid enthalten. Fremdmetallionen werden aufgrund von Niederschlagsbildung für Zellenkurzschlüsse verantwortlich gemacht (US 7,981,388).

Für die Herstellung von Lithiumhexafluorophosphat (LiPF₆), Lithiumfluorperfluoralkylphosphinaten (LiPF(R^{F})₃, Lithiumdifluorphosphat (LiPO₂F₂), Lithiumhexafluoroarsenat (LiAsF₆), Lithiumhexafluorostibat (LiSbF₆) und Lithiumtetrafluoroborat (LiBF₄) oder ähnlicher fluorhaltiger Leitsalze in der erforderlichen Reinheit wird typischerweise Lithiumfluorid eingesetzt, das bereits eine möglichst hohe Reinheit aufweist. In der Literatur wird sehr reines Lithiumfluorid daher häufig auch als "battery grade" spezifiziert.

Aufgrund dieses Erfordernisses ist im Stand der Technik bereits eine Reihe von Verfahren zur Gewinnung von sehr reinem Lithiumfluorid beschrieben worden.

Aus DE 198 09 420 A1 ist ein Verfahren zur Herstellung und Reinigung von Lithiumfluorid aus technischem Lithiumcarbonat bekannt, wobei
a) das in Wasser schwerlösliche Lithiumcarbonat zunächst unter Verwendung von Kohlendioxid in Lithiumhydrogencarbonat überführt und dabei gelöst wird,
b) die so erhaltene Lösung von Lithiumhydrogencarbonat dann über einen Ionentauscher (Lewatit® TP 207) gepumpt wird, um Fremdmetallionen abzutrennen,
c) durch Entfernung von Kohlendioxid aus der so gereinigten Lithiumhydrogencarbonat-Lösung aufgereinigtes Lithiumcarbonat gefällt wird und
d) schließlich das aufgereinigte Lithiumcarbonat mit wässriger Flusssäure versetzt wurde um reines Lithiumfluorid zu erhalten.

Die Ausbeute an Lithiumfluorid beträgt nach diesem Verfahren 66,4 % bezogen auf die eingesetzte Menge an Lithiumcarbonat.

Aus RU 2 330 811 A ist ein Verfahren zur Herstellung von Lithiumfluorid aus technischem Lithiumcarbonat bekannt, wobei ebenfalls zunächst durch Umsetzung mit Kohlendioxid, Reinigung der erhaltenen Lithiumhydrogencarbonat-Lösung mit einem Ionentauscher und Entfernung von Kohlendioxid zunächst reines Lithiumcarbonat gewonnen wird. Letzteres wird dann erneut in Lithiumhydrogencarbonat überführt und durch Zusatz von wässriger Flusssäure in Lithiumfluorid überführt.

Weitere Verfahren, in denen Lithiumfluorid ausgehend von einfach verfügbarem, technischem Lithiumcarbonat durch Umsetzung von Lithiumhydrogencarbonat oder vorgereinigtem Lithiumcarbonat mit Flusssäure, wasserfreiem Fluorwasserstoff oder Ammoniumfluorid erhalten wird sind beispielsweise auch aus US2011/0200508 A, CN 102030344 A, CN 10198022 A, CN101723413 A CN101723414 A, CN101723415 A und CN101570337 A bekannt.

Den vorgenannten Verfahren ist gemeinsam, dass es entweder eines gesonderten Reinigungsschrittes für das eingesetzte Lithiumcarbonat bedarf oder die Umsetzung zum Lithiumfluorid erst nach vollständiger Überführung in das besser wasserlösliche Lithiumhydrogencarbonat erfolgt

Eine Beschreibung der technischen Darstellung von Lithiumfluorid findet sich in Holleman-Wiberg, Lehrbuch der Anorganischen Chemie, 1995.

Der Stand der Technik zeigt, dass es technisch sehr aufwändig ist, hohe Reinheiten zu erzielen und folglich mit den bislang bekannten Verfahren zur Herstellung oder Reinigung von Lithiumfluorid nicht jedes Reinheitserfordernis erfüllt werden kann.

Demgemäß lag eine Aufgabe der vorliegenden Erfindung darin, ein effizientes Verfahren zur Herstellung von hochreinem Lithiumfluorid bereitzustellen, das ohne aufwändige Reinigungsoperationen auskommt, konstant hohe Ausbeuten liefert und mit dem die Herstellung von Lithiumfluorid in einer Morphologie möglich ist, die dessen problemlosen Einsatz in Folgereaktionen erlaubt. Die Lösung der Aufgabe und Gegenstand der vorliegenden Erfindung ist nun ein Verfahren zur Herstellung von Lithiumfluorid umfassend zumindest die Schritte:
a) Bereitstellung eines wässrigen Mediums enthaltend gelöstes Lithiumcarbonat, wobei das zur Bereitstellung eingesetzte feste Lithiumcarbonat einen Reinheitsgrad von 98,0 bis 99,8 Gew.-% bezogen auf das wasserfreie Produkt besitzt
b) Umsetzung des gemäß a) bereitgestellten wässrigen Mediums mit gasförmigem Fluorwasserstoff zu einer wässrigen Suspension von festem Lithiumfluorid
c) Abtrennung des festen Lithiumfluorids aus der wässrigen Suspension
d) Trocknung des abgetrennten Lithiumfluorids.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

Gemäß Schritt a) wird eine wässrige Lösung enthaltend Lithiumcarbonat bereitgestellt.

Im Rahmen der Erfindung ist unter dem Begriff "wässriges Medium enthaltend gelöstes Lithiumcarbonat" ein flüssiges Medium zu verstehen, das
i) gelöstes Lithiumcarbonat enthält, vorzugsweise in einer Menge von mindestens 2,0 g/l, besonders bevorzugt 5,0 g/l bis zur maximalen Löslichkeit im wässrigen Medium bei der gewählten Temperatur, ganz besonders bevorzugt 7,0 g/l bis zur maximalen Löslichkeit im wässrigen Medium bei der gewählten Temperatur. Insbesondere beträgt der Gehalt an Lithiumcarbonat 7,2 bis 15,4 g/l. Dem Fachmann ist bekannt, dass die Löslichkeit von Lithiumcarbonat in reinem Wasser bei 0°C 15,4 g/l bei 20°C 13,3 g/l, bei 60°C 10,1 und bei 100°C 7,2 g/l beträgt und folglich gewisse Konzentrationen nur bei bestimmten Temperaturen erreicht werden können
ii) einen Gewichtsanteil von mindestens 50 % an Wasser, vorzugsweise 80 Gew.-%, besonders bevorzugt mindestens 90 Gew.-% bezogen auf das Gesamtgewicht des flüssigen Mediums enthält, und
iii) vorzugsweise auch feststofffrei ist oder einen Feststoffgehalt von mehr als 0,0 bis zu 0,5 Gew.-%, vorzugsweise feststofffrei ist oder einen Feststoffgehalt von mehr als 0,0 bis zu 0,1 Gew.-%, besonders bevorzugt feststofffrei ist oder einen Feststoffgehalt von mehr als 0,0 bis zu 0,005 Gew.-% und besonders bevorzugt feststofffrei ist,
wobei die Summe der Komponenten i), ii) und vorzugsweise iii) maximal 100 Gew.-%, vorzugsweise 98 bis 100 Gew.-% und besonders bevorzugt 99 bis 100 Gew.-% bezogen auf das Gesamtgewicht des wässrigen Mediums enthaltend gelöstes Lithiumcarbonat beträgt.

Das wässrige Medium enthaltend gelöstes Lithiumcarbonat kann in einer weiteren Ausführungsform der Erfindung als weitere Komponente
iv) zumindest ein mit Wasser mischbares organisches Lösungsmittel enthalten. Geeignete, mit Wasser mischbare organische Lösungsmittel sind beispielsweise ein- oder mehrwertige Alkohole wie Methanol, Ethanol, n-Propanol, Isopropanol, n-Butanol, Ethylengylcol, Ethylenglycolmonomethylether, Ethylenglycolmonoethylether, Propylenglycol, 1,3-Propandiol oder Glycerin, Ketone wie Aceton oder Ethylmethylketon.

Sofern das wässrige Medium enthaltend gelöstes Lithiumcarbonat zumindest ein mit Wasser mischbares organisches Lösungsmittel enthält, kann deren Anteil beispielsweise mehr als 0,0 Gew.-% bis 20 Gew.-% betragen, vorzugsweise 2 bis 10 Gew.-%, wobei dann jeweils gilt, dass die Summe der Komponenten i), ii), iii) und iv) maximal 100 Gew.-%, vorzugsweise 95 bis 100 Gew.-% und besonders bevorzugt 98 bis 100 Gew.-% bezogen auf das Gesamtgewicht des wässrigen Mediums enthaltend gelöstes Lithiumcarbonat beträgt.

Vorzugsweise ist das wässrige Medium enthaltend gelöstes Lithiumcarbonat jedoch frei von mit Wasser mischbaren organischen Lösungsmitteln.

Das wässrige Medium enthaltend gelöstes Lithiumcarbonat kann in einer weiteren Ausführungsform der Erfindung als weitere Komponente
v) einen Komplexbildner enthalten, vorzugsweise in einer Menge von 0,001 bis 1 Gew.-%, vorzugsweise 0,005 bis 0,2 Gew.-% bezogen auf das Gesamtgewicht des wässrigen Mediums enthaltend gelöstes Lithiumcarbonat.

Komplexbildner sind vorzugsweise solche, deren Komplexe mit Calcium-Ionen und MagnesiumIonen Komplexe bilden, die bei einem pH-Wert von 8 und 20°C eine Löslichkeit von mehr als 0,02 mol/l besitzen. Beispiele für geeignete Komplexbildner sind Ethylendiamintetraessigsäure (EDTA) und seine Alkalimetall- oder Ammoniumsalze, wobei Ethylendiamintetraessigsäure bevorzugt ist.

In einer Ausführungsform der Erfindung ist das wässrige Medium enthaltend gelöstes Lithiumcarbonat jedoch frei von Komplexbildnern.

Zur Bereitstellung der wässrigen Lösung enthaltend Lithiumcarbonat wird vorzugsweise so vorgegangen, dass festes Lithiumcarbonat mit einem lithiumcarbonatfreien oder lithiumcarbonatarmen wässrigen Medium in Kontakt gebracht wird, so dass das feste Lithiumcarbonat zumindest teilweise in Lösung geht. Unter einem Lithiumcarbonatarmen, wässrigen Medium wird ein wässriges Medium verstanden, das einen Gehalt an Lithiumcarbonat von bis zu 1,0 g/l, vorzugsweise bis zu 0,5 g/l Lithiumcarbonat aufweist aber nicht frei von Lithiumcarbonat ist.

Das zur Bereitstellung eingesetzte wässrige Medium erfüllt die Bedingungen die oben unter ii) und iii) genannt sind und weist optional die Komponenten iv) und v) auf.

Im einfachsten Fall ist das wässrige Medium Wasser, vorzugsweise Wasser mit einem spezifischen elektrischen Widerstand von 5 MΩ·cm bei 25 °C oder mehr.

In einer bevorzugten Ausführungsform werden die Schritte a) bis d) ein- oder mehrfach wiederholt. In diesem Fall wird bei der Wiederholung zur Bereitstellung des wässrigen Mediums enthaltend gelöstes Lithiumcarbonat als lithiumcarbonatfreies oder lithiumcarbonatarmes wässriges Medium das wässrige Medium eingesetzt, dass in einem vorangegangenen Schritt c) bei der Abtrennung von festem Lithiumfluorid aus der wässrigen Suspension von Lithiumfluorid anfällt. In diesem Fall enthält das lithiumcarbonatfreie oder lithiumcarbonatarme wässrige Medium gelöstes Lithiumfluorid, typischerweise bis zur Sättigungsgrenze bei der jeweiligen Temperatur.

In einer Ausführungsform kann das Inkontaktbringen des lithiumcarbonatfreien oder -armen, wässrigen Mediums mit dem festen Lithiumcarbonat in einem Rührreaktor, einem Durchflussreaktor oder jeder anderen Apparatur erfolgen, die dem Fachmann für die Kontaktierung von flüssigen mit festen Stoffen bekannt ist. Vorzugsweise wird im Sinne einer kurzen Verweildauer und der Erzielung einer möglichst nah am Sättigungspunkt liegenden Konzentration an Lithiumcarbonat im eingesetzten wässrigen Medium ein Überschuss an Lithiumcarbonat eingesetzt, d.h. so viel, dass eine vollständige Auflösung des festen Lithiumcarbonats nicht erfolgen kann. Um in diesem Fall den Feststoffanteil gemäß ii) zu begrenzen, erfolgt anschließend eine Filtration, Sedimentation, Zentrifugation oder ein anderes, beliebiges Verfahren, das dem Fachmann zur Abtrennung von Feststoffen aus oder von Flüssigkeit bekannt ist, wobei die Filtration bevorzugt ist.

Sofern die Verfahrensschritte a) bis c) wiederholt und/oder kontinuierlich durchgeführt werden, ist eine Filtration durch einen Querstromfilter bevorzugt.

Die Temperatur beim Inkontaktbringen kann beispielsweise vom Gefrierpunkt bis zum Siedepunkt des eingesetzten wässrigen Mediums erfolgen, vorzugsweise 0 bis 100°C, besonders bevorzugt 10° bis 60°C und besonders bevorzugt 10° bis 35°C, insbesondere 16 bis 24°C.

Der Druck beim Inkontaktbringen kann beispielsweise 100 hPa bis 2 MPa betragen, 900 hPa bis 1200 hPa, insbesondere Umgebungsdruck ist besonders bevorzugt.

Unter technischem Lithiumcarbonat wird im Rahmen der Erfindung Lithiumcarbonat verstanden, das einen Reinheitsgrad von 95,0 bis 99,9 Gew.-% vorzugsweise 98,0 bis 99,8 Gew.-% und besonders bevorzugt 98,5 bis 99,8 Gew.-% bezogen auf wasserfreies Produkt besitzt.

Vorzugsweise enthält das technische Lithiumcarbonat weiterhin an Fremdionen, d.h. an Ionen, die nicht Lithium- oder Carbonat-Ionen sind
1) einen Gehalt von 200 bis 5000 ppm, vorzugsweise 300 bis 2000 und besonders bevorzugt 500 bis 1200 ppm Natrium in ionischer Form und/oder
2) einen Gehalt von 5 bis 1000 ppm, vorzugsweise 10 bis 600 ppm Kalium in ionischer Form und/oder
3) einen Gehalt von 50 bis 1000 ppm, vorzugsweise 100 bis 500 und besonders bevorzugt 100 bis 400 ppm Calcium in ionischer Form und/oder
4) einen Gehalt von 20 bis 500 ppm, vorzugsweise 20 bis 200 und besonders bevorzugt 50 bis 100 ppm Magnesium in ionischer Form.

Weiterhin enthält das technische Lithiumcarbonat weiterhin an Fremdionen, d.h. an Ionen, die nicht Lithium- oder Carbonat-Ionen sind:
i) einen Gehalt von 50 bis 1000 ppm, vorzugsweise 100 bis 800 ppm Sulfat und/oder
ii) einen Gehalt von 10 bis 1000 ppm, vorzugsweise 100 bis 500 ppm Chlorid, ebenfalls bezogen auf das wasserfreie Produkt.

Generell gilt, dass die Summe von Lithiumcarbonat und den vorgenannten Fremdionen 1) bis 4) sowie gegebenenfalls i) und ii) 1,000,000 ppm bezogen auf das Gesamtgewicht des technischen Lithiumcarbonats bezogen auf das wasserfreie Produkt nicht überschreitet.

In einer weiteren Ausführungsform weist das technische Lithiumcarbonat eine Reinheit von 98,5 bis 99,5 Gew.-% und einen Gehalt von 500 bis 2000 ppm an Fremdmetallionen d.h. Natrium, Kalium, Magnesium und Calcium auf.

In einer weiteren Ausführungsform weist das technische Lithiumcarbonat zusätzlich einen Gehalt von 100 bis 800 ppm an Fremdanionen, d.h. Sulfat oder Chlorid bezogen auf das wasserfreie Produkt auf.

Die hierin gemachten ppm-Angaben beziehen sich, sofern nicht explizit anders angegeben, auf Gewichtsanteile, die Gehalte der genannten Kationen und Anionen werden durch Ionenchromatographie ermittelt, sofern nicht anders angegeben gemäß Angaben im experimentellen Teil.

In einer Ausführungsform des erfindungsgemäßen Verfahrens erfolgt die Bereitstellung des wässrigen Mediums enthaltend Lithiumcarbonat bzw. das Inkontaktbringen eines lithiumcarbonatfreien oder - armen, wässrigen Mediums mit festem Lithiumcarbonat batchweise oder kontinuierlich, wobei die kontinuierliche Durchführung bevorzugt ist.

Das gemäß Schritt a) bereitgestellte wässrige Medium enthaltend gelöstes Lithiumcarbonat weist typischerweise einen pH-Wert von 8,5 bis 12,0, vorzugsweise von 9,0 bis 11,5 gemessen oder berechnet auf 20°C und 1013 hPa auf.

Bevor das gemäß Schritt a) bereitgestellte wässrige Medium enthaltend gelöstes Lithiumcarbonat in Schritt b) eingesetzt wird, kann es über einen Ionentauscher geleitet werden, um insbesondere Calcium- und Magnesiumionen zumindest teilweise zu entfernen. Dafür können beispielsweise schwach- als auch stark saure Kationenaustauscher eingesetzt werden. Für den Einsatz im erfindungsgemäßen Verfahren können die Ionenaustauscher in Vorrichtungen, wie beispielsweise Durchflusssäulen, die mit den oben beschriebenen Kationenaustauschern beispielsweise in Form von Pulvern, Perlen oder Granulaten befüllt sind, eingesetzt werden.

Besonders geeignet sind Ionentauscher enthaltend Copolymerisate von zumindest Styrol und Divinylbenzol, die weiterhin beispielsweise Aminoalkylenphosphonsäure-Gruppen oder Iminodiessigsäure-Gruppen enthalten.

Solche Ionentauscher sind beispielsweise solche des Typs Lewatit TM wie beispielsweise Lewatit TM OC 1060 (AMP-Typ), Lewatit TM TP 208 (IDA-Typ), Lewatit TM E 304/88, Lewatit TM S 108, Lewatit TP 207, Lewatit TM S 100; solche des Typs Amberlite TM, wie beispielsweise Amberlite TM IR 120, Amberlite TM IRA 743; solche des Typs Dowex TM, wie beispielsweise Dowex TM HCR; solche des Typs Duolite, wie beispielsweise Duolite TM C 20, Duolite TM C 467, Duolite TM FS 346; und solche des Typs Imac TM, wie beispielsweise Imac TM TMR, wobei Lewatit TM Typen bevorzugt sind.

Bevorzugt werden solche Ionentauscher eingesetzt, die möglichst natriumarm sind.

In einer Ausführungsform des erfindungsgemäßen Verfahrens findet keine Behandlung mit Ionentauschern statt.

Gemäß Schritt b) erfolgt die Umsetzung des gemäß Schritt a) bereitgestellten wässrigen Mediums enthaltend gelöstes Lithiumcarbonat mit gasförmigem Fluorwasserstoff zu einer wässrigen Suspension von festem Lithiumfluorid.

Die Umsetzung kann beispielsweise durch Einleiten oder Überleiten eines gasförmigen Fluorwasserstoff enthaltenen Gasstromes in oder über das wässrige Mediums enthaltend gelöstes Lithiumcarbonat erfolgen oder durch Versprühen, Vernebeln oder Durchfließen des wässrigen Mediums enthaltend gelöstes Lithiumcarbonat in oder durch ein Gas enthaltend gasförmigen Fluorwasserstoff.

Aufgrund der sehr starken Löslichkeit von gasförmigem Fluorwasserstoff in wässrigen Medien ist Überleiten, Versprühen, Vernebeln oder Durchfließen bevorzugt wobei Überleiten noch weiter bevorzugt ist.

Als gasförmigen Fluorwasserstoff enthaltenen Gasstrom oder Gas enthaltend gasförmigen Fluorwasserstoff kann entweder gasförmiger Fluorwasserstoff als solcher eingesetzt werden oder ein Gas enthaltend gasförmigen Fluorwasserstoff und ein Inertgas, wobei unter einem Inertgas ein Gas zu verstehen ist, dass unter den üblichen Reaktionsbedingungen nicht mit Lithiumfluorid oder Fluorwasserstoff oder Wasser reagiert. Beispiele sind Luft, Stickstoff, Argon und andere Edelgase oder Kohlendioxid, wobei Luft und noch mehr Stickstoff bevorzugt sind.

Der Anteil an Inertgas kann beliebig variieren und beispielsweise 0,01 bis 99 Vol.-% betragen, vorzugsweise 1 bis 20 Vol.-%.

In einer bevorzugten Ausführungsform enthält der eingesetzte gasförmige Fluorwasserstoff 50 ppm Arsen in Form von Arsenverbindungen oder weniger, vorzugsweise 10 ppm oder weniger. Die angegebenen Arsengehalte werden photometrisch nach Umsetzung zu Arsenwasserstoff und dessen Umsetzung mit Silberdiethyldithiocarbaminat zu einem roten Farbkomplex (Spektralpotometer, z.B. LKB Biochrom, Ultrospec) bei 530 nm ermittelt.

In einer ebenfalls bevorzugten Ausführungsform enthält der eingesetzte gasförmige Fluorwasserstoff 100 ppm Hexafluorkieselsäure oder weniger, vorzugsweise 50 ppm oder weniger. Der angegebene Hexafluorkieselsäuregehalt wird photometrisch als Silicomolybdänsäure und deren Reduktion mit Ascorbinsäure zu einem blauen Farbkomplex (Spektralpotometer, z.B. LKB Biochrom, Ultrospec) ermittelt. Störende Einflüsse von Fluoriden werden durch Borsäure, störende Reaktionen von Phosphat und Arsen durch Zugabe von Weinsäure unterdrückt.

Bei der Umsetzung gemäß Schritt b) entsteht Lithiumfluorid, das aufgrund der Tatsache, dass es im wässrigen Medium schwerer löslich ist als Lithiumcarbonat, ausfällt und folglich eine wässrige Suspension von festem Lithiumfluorid bildet. Dem Fachmann ist bekannt, dass Lithiumfluorid eine Löslichkeit von etwa 2,7 g/l bei 20°C besitzt

Die Umsetzung erfolgt vorzugsweise derart, dass die resultierende wässrige Suspension von festem Lithiumfluorid einen pH-Wert von 3,5 bis 8,0, vorzugsweise 4,0 bis 7,5 und besonders bevorzugt 5,0 bis 7,2 erreicht. Bei den genannten pH-Werten wird Kohlendioxid freigesetzt. Um dessen Freisetzung aus der Suspension zu ermöglichen, ist es vorteilhaft, die Suspension beispielsweise zu Rühren oder über statische Mischelemente zu leiten.

Anmelderseitig wird vermutet, ohne sich wissenschaftlich darauf festlegen zu wollen, dass durch die Umsetzung mit gasförmigem Fluorwasserstoff, anders als im Stand der Technik, bei dem insbesondere wässrige Fluorwasserstoffsäure eingesetzt wird, keine hohen lokalen Konzentrationen von Fluorid und Lithiumverbindungen wie Lithiumhydrogencarbonat auftreten, und folglich die Fällung ungewöhnlich reinen Lithiumfluorids überhaupt erst möglich wird. Weiterhin wird beobachtet, dass das Lithiumfluorid in einer morphologischen Form gewonnen wird, die in anschließenden Verfahren, insbesondere bei der Herstellung von Komplexsalzen wie Lithiumhexafluorophosphat, von besonderem Vorteil sind.

Daher wird auch Lithiumfluorid mit einem D50-Wert von 15 bis 1000 µm, vorzugsweise 15 bis 300 ppm, besonders bevorzugt 15 bis 200 µm und noch weiter bevorzugt 20 bis 200 µm beschrieben.

Das Lithiumfluorid besitzt weiterhin vorzugsweise einen D10-Wert von 5 µm oder mehr, vorzugsweise 10 µm oder mehr. In einer anderen Ausführungsform besitzt das Lithiumfluorid einen D10-Wert von 15 µm oder mehr.

Unter dem D50-Wert bzw. dem D10-Wert ist die Partikelgröße gemeint, in der und unter der insgesamt 10 Vol.-% bzw. 50 Vol.% des Lithiumfluorids vorliegen.

Das Lithiumfluorid besitzt weiterhin vorzugsweise eine Schüttdichte von 0,8 g/cm³ oder mehr, vorzugsweise 0,9 g/cm³ oder mehr und besonders bevorzugt von 0,9 g/cm³ bis 1,2 g/cm³.

Das Lithiumfluorid besitzt weiterhin vorzugsweise einen Reinheitsgrad von 99,9000 bis 99,9995 Gew.-% vorzugsweise 99,9500 bis 99,9995 Gew.-% und besonders bevorzugt 99,9700 bis 99,9995 bezogen auf wasserfreies Produkt.

Das Lithiumfluorid besitzt weiterhin vorzugsweise an Fremdionen
1) einen Gehalt von 0,1 bis 75 ppm, vorzugsweise 0,1 bis 50 und besonders bevorzugt 0,5 bis 10 ppm und besonders bevorzugt 0,5 bis 5 ppm Natrium in ionischer Form und
2) einen Gehalt von 0,01 bis 10 ppm, vorzugsweise 0,5 bis 5 ppm und besonders bevorzugt 0,1 bis 1 ppm Kalium in ionischer Form.

Das Lithiumfluorid besitzt weiterhin vorzugsweise an Fremdionen
3) einen Gehalt von 0,05 bis 300 ppm, vorzugsweise 0,1 bis 250 ppm und besonders bevorzugt 0,5 bis 100 ppm Calcium in ionischer Form und/oder
4) einen Gehalt von 0,05 bis 300 ppm, vorzugsweise 0,1 bis 250 ppm und besonders bevorzugt 0,5 bis 50 ppm Magnesium in ionischer Form.

Das Lithiumfluorid besitzt weiterhin beispielsweise an Fremdionen
5) einen Gehalt von 0,1 bis 100 ppm, vorzugsweise 0,5 bis 10 ppm Sulfat und/oder
6) einen Gehalt von 0,1 bis 1000 ppm, vorzugsweise 0,5 bis 500 ppm Chlorid,
ebenfalls bezogen auf das wasserfreie Produkt und wobei gilt, daß die Summe von Lithiumfluorid und den vorgenannten Fremdionen 1,000,000 ppm bezogen auf das Gesamtgewicht des technischen Lithiumcarbonats bezogen auf das wasserfreie Produkt nicht überschreitet.

In einer Variante enthält das Lithiumfluorid einen Gehalt an Fremdmetallionen von insgesamt 300 ppm oder weniger, vorzugsweise 20 ppm oder weniger und besonders bevorzugt 10 ppm oder weniger.

Das erfindungsgemäß hergestellte Lithiumfluorid eignen sich insbesondere zur Verwendung zur Herstellung von fluorhaltigen Leitsalzen für Lithium-Ionen-Akkumulatoren, wie insbesondere Lithiumhexafluorophosphat (LiPF₆), Lithiumfluorperfluoralkylphosphinaten (LiPF(R^{F})₃, Lithiumdifluorphosphat (LiPO₂F₂), Lithiumhexafluoroarsenat (LiAsF₆) Lithiumhexafluorostibat (LiSbF₆) und Lithiumtetrafluoroborat (LiBF₄).

Beschrieben wird daher auch ein Verfahren zur Herstellung fluorhaltiger Leitsalze für Lithium-Ionen-Akkumulatoren wie insbesondere Lithiumhexafluorophosphat (LiPF₆), Lithiumfluorperfluoralkylphosphinaten (LiPF(R^{F})₃, Lithiumdifluorphosphat (LiPO₂F₂), Lithiumhexafluoroarsenat (LiAsF₆) Lithiumhexafluorostibat (LiSbF₆) und Lithiumtetrafluoroborat (LiBF₄), das dadurch gekennzeichnet ist, dass das erfindungsgemäß hergestellte Lithiumfluorid eingesetzt wird

Die Temperatur bei der Umsetzung gemäß Schritt b) kann beispielsweise vom Gefrierpunkt bis zum Siedepunkt des eingesetzten wässrigen Mediums enthaltend gelöstes Lithiumcarbonat betragen, vorzugsweise 0 bis 65°C, besonders bevorzugt 15° bis 45°C und besonders bevorzugt 15° bis 35°C, insbesondere 16 bis 24°C.

Der Druck bei der Umsetzung gemäß Schritt b) kann beispielsweise 100 hPa bis 2 MPa betragen, bevorzugt 900 hPa bis 1200 hPa, insbesondere Umgebungsdruck ist besonders bevorzugt.

Gemäß Schritt c) erfolgt die Abtrennung des festen Lithiumfluorids aus der wässrigen Suspension. Die Abtrennung erfolgt beispielsweise durch Filtration, Sedimentation, Zentrifugation oder ein anderes, beliebiges Verfahren, das dem Fachmann zur Abtrennung von Feststoffen aus oder von Flüssigkeiten bekannt ist, wobei die Filtration bevorzugt ist.

Sofern das Filtrat für Schritt a) wieder eingesetzt wird und die Verfahrensschritte a) bis c) wiederholt durchgeführt werden , ist eine Filtration durch einen Querstromfilter bevorzugt.

Das so erhaltene feste Lithiumfluorid besitzt typischerweise noch eine Restfeuchte von 1 bis 40 Gew.-%, bevorzugt 5 bis 30 Gew.-%.

Bevor das gemäß Schritt c) abgetrennte Lithiumfluorid gemäß Schritt d) getrocknet wird, kann es mit Wasser oder einem Medium enthaltend Wasser und mit Wasser mischbare organische Lösungsmittel ein- oder mehrfach gewaschen werden. Wasser ist bevorzugt. Wasser mit einem elektrischen Widerstand von 15 MΩ·cm bei 25°C oder mehr ist besonders bevorzugt. Aus Schritt c) am festen Lithiumfluorid anhaftendes Wasser mit Fremdionen wird dadurch weitestgehend entfernt.

Gemäß Schritt d) wird das Lithiumfluorid getrocknet. Die Trocknung kann in jeder dem Fachmann zur Trocknung bekannten Apparatur durchgeführt werden. Vorzugsweise erfolgt die Trocknung durch Erhitzen des Lithiumfluorids, vorzugsweise auf 100 bis 800°C besonders bevorzugt 200 bis 500°C.

Vorzugsweise erfolgt die Trocknung bis auf einen Wassergehalt von 0,2 Gew.-% oder weniger, vorzugsweise 0,1 Gew.-% oder weniger.

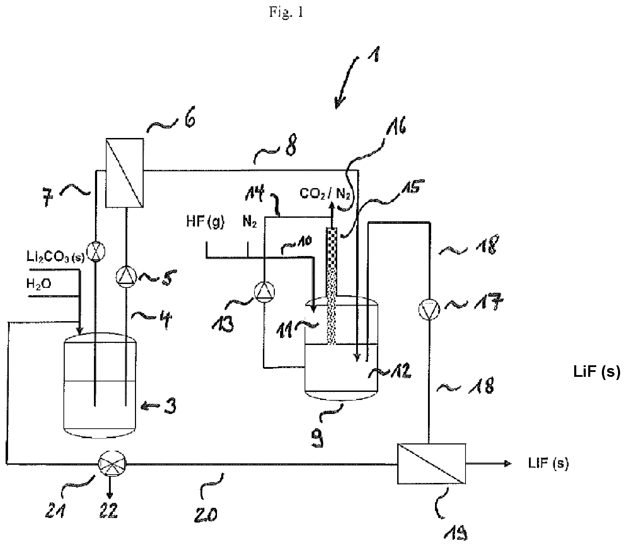

Die vorliegende Erfindung wird anhand der Figur 1 näher erläutert.

In einer Vorrichtung zur Herstellung von Lithiumfluorid 1 wird festes Lithiumcarbonat (Li₂CO₃ (s)) mit Wasser (H₂O), und, sofern es sich nicht um die Erstbefüllung der Vorrichtung 1 handelt, dem Filtrat aus der Filtrationseinheit 19 in der Vorlage 3 suspendiert, wobei das Lithiumcarbonat zumindest teilweise in Lösung geht. Die so erhaltene Suspension wird über die Leitung 4 durch die Pumpe 5 über eine Filtrationseinheit 6, die hier als Querstromfilter ausgebildet ist, gefördert, wobei nicht gelöstes Lithiumcarbonat in die Vorlage 3 über die Leitung 7 zurückgeführt wird und das Filtrat, das wässrige Medium enthaltend gelöstes Lithiumcarbonat, über die Leitung 8 in den Reaktor 9 eingeleitet wird. In den Reaktor 9 wird über die Leitung 10 ein gasförmigen Fluorwasserstoff enthaltener Gasstrom, der hier gasförmigen Fluorwasserstoff und Stickstoff enthält, in den Gasraum 11 des Reaktors eingeleitet, der sich über dem Flüssigraum 12 des Reaktors befindet. Durch die Pumpe 13 wird der Inhalt des Flüssigkeitsraums 12, der zunächst im Wesentlichen aus dem wässrigen Medium enthaltend gelöstes Lithiumcarbonat besteht und durch die Reaktion in eine Suspension enthaltend festes Lithiumfluorid überführt wird über die Leitung 14 auf eine Füllkörperkolonne 15 geführt, in die Freisetzung des während der Reaktion gebildeten Kohlendioxids aus der Suspension gefördert wird. Über den Auslass 16 wird das Kohlendioxid und der als Verdünnungsmittel genutzte Stickstoff ausgeschleust. Nach Durchlaufen der Füllkörperkolonne fließt der aus dem Reaktor 9 geführte Inhalt des Flüssigraums 12 durch den Gasraum 11 wieder in den Flüssigraum 12 zurück. Die Rückführung durch den Gasraum 11 besitzt den Vorteil, dass die Flüssigkeitsoberfläche, teilweise auch durch passive Zerstäubung, erhöht wird, was die Reaktion mit gasförmigem Fluorwasserstoff fördert. Nach Erreichen des Ziel-pH-Wertes oder ausreichender Bildung von festem Lithiumfluorid wird die entstandene Suspension von festem Lithiumfluorid durch die Pumpe 17 über die Leitung 18 zur Filtrationseinheit 19 gefördert, die hier als Querstromfilter ausgebildet ist. Das feste Lithiumfluorid (LiF (s)) wird gewonnen, das Filtrat, das lithiumcarbonatfreie oder lithiumcarbonatarme wässrige Medium wird über die Leitung 20 in die Vorlage 3 zurückgeführt. Da das gewonnene Lithiumfluorid einen Restgehalt an Wasser besitzt und Wasser auch über den Auslass 16 mit dem Kohlendioxid ausgetragen wird, dient die Zuführung des Wassers (H₂O) in die Vorlage 3 im Wesentlichen nach der Erstbefüllung der Vorrichtung 1 zum Ausgleich des vorstehend beschriebenen Wasserverlustes in weiteren Zyklen.

Dem Fachmann ist klar, dass sich Fremdmetallionen wie insbesondere Natrium und Kalium, die gut wasserlösliche Carbonate und Fluoride bilden, im Kreislaufstrom der wässrigen Medien anreichern. Es wurde jedoch gefunden, dass selbst bei hoher Zyklenzahl von 10 bis 500 Zyklen auch ohne Ausschleusung von Filtrat der Filtrationseinheit 19 eine gleichbleibend hohe Qualität von Lithiumfluorid erhalten werden konnte. Gegebenenfalls kann ein Teil des Filtrats der Filtrationseinheit 19 über den Auslass 20 am Ventil 21, das hier beispielhaft als Dreiwegeventil ausgestaltet ist, ausgeschleust werden.

Durch die Rückführung des Filtrats der Filtrationseinheit 19 in die Vorlage 3 ist es möglich, bei der Lithiumfluoridherstellung einen Umsetzungsgrad von 95 % oder mehr, insbesondere bei hohen Zyklenzahlen von beispielsweise 30 oder mehr sogar von 97 % oder mehr zu erreichen, wobei unter Umsetzungsgrad die Ausbeute an hochreinem Lithiumfluorid bezogen auf das eingesetzte Lithiumcarbonat zu verstehen ist.

Weitere Ausführungsformen ergeben sich aus den Beispielen.

### Beispiele

Die in den folgenden Beispielen angegebenen Partikelgrößenverteilungen wurden unter Verwendung eines Partikelgrößenanalysators des Typs Coulter LS230 in Ethanol durch Laserdiffraktometrie ermittelt. Es wurden pro Probe drei Messungen durchgeführt und diese - sofern keine Trend zu erkennen war - gemittelt. Jede Messung dauerte dabei 90s. Als Ergebnis werden im Folgenden die "D10" und "D50" Werte angegeben, wie sie oben erläutert wurden.

Die Analytik auf vorliegende Anionen und Kationen werden per Ionenchromatographie durchgeführt. Dazu werden folgende Geräte und Einstellungen verwendet:

**Kationen (Dionex ICS 2100):**

| | | |
|---|---|---|
| Säule: | | IonPac CS16 3*250-mm Analytische Kolonne mit Schutzeinrichtung |
| Probenvolumen: | 1 µl | |
| Eluens: | | 36 mM Methansulfonsäure konstanter Konzentration |
| Eluens Flussrate: | | 0,5 ml/min |
| Temperatur: | | 60°C |
| SRS: | | CSRS 300 (2-mm) |

**Anionen (Dionex ICS 2100):**

| | | |
|---|---|---|
| Säule: | | IonPac AS20 2*250-mm Analytische Kolonne mit Schutzeinrichtung |
| Probenvolumen: | 1 µl | |
| Eluens: | | KOH Gradient: 0 min/15 mM, 10 min/15 mM, 13 min/80 mM, 27 min/100 mM, 27.1 min/15 mM, 34 min/15 mM |
| Eluens Flussrate: | | 0,25 ml/min |
| Temperatur: | | 30°C |
| SRS: | | ASRS 300 (2-mm) |

### Beispiel 1: Herstellung von hochreinem Lithiumfluorid (erfindungsgemäß)

In einer Vorrichtung gemäß Figur 1 wurden in der Vorlage 3 500g festes Lithiumcarbonat technischer Qualität (Reinheit: >98 Gew.-%; Na: 231 ppm, K: 98 ppm, Mg: 66 ppm, Ca: 239 ppm) und 20 Liter Wasser vorgelegt und bei 20°C eine Suspension hergestellt. Nach etwa fünf Minuten wurde die Suspension über die Filtrationseinheit 6, die als Querstromfilter ausgeführt war, geführt und das dabei entstandene Medium enthaltend gelöstes Lithiumcarbonat, hier eine wässrige Lösung von Lithiumcarbonat mit einem Gehalt von 1,32 Gew.-%, über die Leitung 8 in den Reaktor 9 überführt.

Nachdem insgesamt 4 kg des Medium in den Reaktor 9 gepumpt wurden, wurde der Zulauf aus der Filtrationseinheit 6 gestoppt und in den Reaktor 9 gasförmiger Fluorwasserstoff in den Gasraum 11 bei kontinuierlichem Umpumpen des Mediums über die Pumpe 13, die Leitung 14 und die Füllkörperkolonne 15 begonnen. Diese Dosierung wurde beendet, als der pH-Wert der umgepumpten Lösung bei 7,0 lag.

Die entstandene Suspension aus dem Reaktor 9 wurde über die Pumpe 17 und die Leitung 18 zur Filtrationseinheit 19, die hier als Drucknutsche ausgelegt war, gefördert, dort filtriert und das Filtrat, hier ein lithiumcarbonatfreies wässriges Medium über die Leitung 20 zur Vorlage 3 zurückgefördert. Das lithiumcarbonatfreie wässrige Medium wies einen Gehalt an Lithiumfluorid von etwa 0,05 Gew.-% auf.

Der oben beschriebene Vorgang wurde fünfmal wiederholt.

Das an der Filtrationseinheit 19 abgetrennte, noch wasserfeuchte Lithiumfluorid (insgesamt 148g) wurde entnommen und auf einer weiteren Drucknutsche dreimal mit Wasser mit einer Leitfähigkeit von 5 MΩ·cm bei 25°C (jeweils 30 ml) gewaschen.

Das so erhaltene Lithiumfluorid wurde in einem Vakuumtrockenschrank bei 90°C und 100mbar getrocknet.

Ausbeute: 120g eines weißen, feinen Pulvers.

Das erhaltene Produkt wies einen Kaliumgehalt von 0,5 ppm und einen Natriumgehalt von 2,5 ppm auf, der Magnesium-Gehalt des Produktes lag bei 99 ppm, der Calciumgehalt bei 256 ppm. Der Chlorid-Gehalt betrug weniger als 10 ppm.

Die Messung der Partikelgrößenverteilung ergab einen D50-Wert von 45 µm und einen D10-Wert von 22 µm. Die Schüttdichte betrug 1,00 g/cm³.

Bei der Durchführung von 50 Zyklen (Wiederholungen) wurden insgesamt 97 % des eingesetzten Lithiums in Form von hochreinem Lithiumfluorid erhalten.

### Beispiel 2 (erfindungsgemäß)

In einer Vorrichtung gemäß Figur 1, die jedoch zusätzlich in Leitung 8 eine Durchflusskolonne mit einem Bett aus dem Ionentauscher Lewatit TP 207, einem Iminodiessigsäure-Gruppen enthaltenden Copolymerisat von Styrol und Divinylbenzol aufwies, wurden in der Vorlage 3 500g festes Lithiumcarbonat technischer Qualität (Reinheit: >98 Gew.-%; Na: 231 ppm, K: 98 ppm, Mg: 66 ppm, Ca: 239 ppm) und 20 Liter Wasser vorgelegt und bei 20°C eine Suspension hergestellt. Nach etwa fünf Minuten wurde die Suspension über die Filtrationseinheit 6, die als Querstromfilter ausgeführt war, geführt und das dabei entstandene Medium enthaltend gelöstes Lithiumcarbonat, hier eine wässrige Lösung von Lithiumcarbonat mit einem Gehalt von 1,32 Gew.-%, über die Leitung 8 und die oben beschriebene Durchflusskolonne, in den Reaktor 9 überführt. Die weitere Umsetzung erfolgte entsprechend Beispiel 1.

Der verwendete Ionentauscher wurde vorher durch Spülen mit einer ca. 1%igen Lithiumcarbonat-Lösung so lange gewaschen, bis das austretende Wasser einen Natriumgehalt <1 ppm besaß.

Ausbeute: 149,8 g eines weißen, feinen Pulvers.

Das erhaltene Produkt wies einen Kaliumgehalt von 0,5 ppm und einen Natriumgehalt von 1 ppm auf, der Magnesium-Gehalt des Produktes lag bei 13 ppm, der Calcium-Gehalt bei 30 ppm. Der Chlorid-Gehalt betrug weniger als 10 ppm.

Die Messung der Partikelgrößenverteilung ergab einen D50-Wert von 36 µm und einen D10-Wert von 14 µm .Die Schüttdichte betrug 0,91 g/cm³.

### Beispiel 3: Herstellung von Lithiumhexafluorophosphat enthaltenden Elektrolytlösungen

Durch ein auf 450°C beheiztes, ca. 6 m langes Metallrohr mit einem Innendurchmesser von 8 mm wurde eine Mischung aus etwa 1,03 mol/h gasförmigem Fluorwasserstoff und 0,21 mol/h gasförmigem Phosphortrichlorid geleitet. In diese Reaktionsmischung wurden 8 l/h Chlor eingeleitet und die Reaktionsmischung durch ein weiteres, ca. 4 m langes Metallrohr geleitet, das auf 250°C erhitzt wurde.

Das gasförmige Reaktionsprodukt wurde auf Raumtemperatur abgekühlt und dann über eine Teflonfritte durch ein Edelstahlrohr mit einem Teflon-Innenrohr mit einem Innendurchmesser von 45 mm geleitet, das bis zu einer Füllhöhe von 190 mm mit Lithiumfluorid Pulver (300,0 g), hergestellt gemäß Beispiel 1, bestückt war. Während der Reaktion wurde das Lithiumfluorid-Pulver mit einem Rührer gerührt. Die Durchflussrate betrug etwa 40 l/h.

Das Gasgemisch, das den Reaktor verließ, wurde in einer wässrigen Kaliumhydroxid-Lösung (15 Gew.-%) aufgefangen.

Nach insgesamt 7 Stunden Reaktionszeit wurde die Dosierung der Edukte durch die Dosierung eines Inertgases ersetzt und das Reaktivgas aus dem System verdrängt.

Durch Auswaschen des festen Reaktionsrückstandes mit wasserfreiem Acetonitril konnten insgesamt 76,9 g Lithiumhexafluorophosphat isoliert und nachgewiesen werden. Das verbleibende, nicht umgesetzte Lithiumfluorid wurde für weitere Versuche erneut eingesetzt.

Das Acetonitril wurde unter Ausschluss von Wasser und Sauerstoff verdampft und soviel vom erhaltenen Rückstand in einer Mischung von Dimethylcarbonat und Ethylencarbonat (1:1 w/w) aufgenommen, dass eine 11,8 Gew.-%ige Lösung von Lithiumhexafluorophosphat erhalten wurde. Diese Lösung wurde unter anderem wie folgt charakterisiert:

| | |
|---|---|
| Na | < 3 ppm |
| K | < 1 ppm |
| Ca | < 1 ppm |
| Mg | < 1 ppm |
| Sulfat | < 1 ppm |
| Chlorid | < 1 ppm |

### Beispiel 3a: Herstellung von Lithiumhexafluorophosphat enthaltenden Elektrolytlösungen

Durch ein auf 280°C beheiztes, ca. 6 m langes Metallrohr mit einem Innendurchmesser von 8 mm wurde eine Mischung aus etwa 1,03 mol/h gasförmigem Fluorwasserstoff und 0,21 mol/h gasförmigem Phosphortrichlorid geleitet. In diese Reaktionsmischung wurden 8 l/h Chlor eingeleitet und die Reaktionsmischung durch ein weiteres, ca. 12 m langes Metallrohr geleitet, das auf 5°C gekühlt wurde.

Das gasförmige Reaktionsprodukt wurde auf Raumtemperatur abgekühlt und dann über eine Teflonfritte durch ein Edelstahlrohr mit einem Teflon-Innenrohr mit einem Innendurchmesser von 65 mm geleitet, das bis zu einer Füllhöhe von 110 mm mit Lithiumfluorid Pulver (300,0 g), hergestellt gemäß Beispiel 1, bestückt war. Während der Reaktion wurde das Lithiumfluorid-Pulver mit einem Rührer gerührt. Die Durchflussrate betrug etwa 40 l/h.

Das Gasgemisch, das den Reaktor verließ, wurde in einer wässrigen Kaliumhydroxid-Lösung (15 Gew.-%) aufgefangen.

Nach insgesamt 7 Stunden Reaktionszeit wurde die Dosierung der Edukte durch die Dosierung eines Inertgases ersetzt und das Reaktivgas aus dem System verdrängt.

Durch Auswaschen des festen Reaktionsrückstandes mit wasserfreiem Acetonitril konnten insgesamt 76,9 g Lithiumhexafluorophosphat isoliert und nachgewiesen werden. Das verbleibende, nicht umgesetzte Lithiumfluorid wurde für weitere Versuche erneut eingesetzt.

Das Acetonitril wurde unter Ausschluss von Wasser und Sauerstoff verdampft und soviel vom erhaltenen Rückstand in einer Mischung von Dimethylcarbonat und Ethylencarbonat (1:1 w/w) aufgenommen, dass nach Filtration über eine 200 nm Teflonmembran eine 11,8 Gew.-%ige Lösung von Lithiumhexafluorophosphat erhalten wurde. Diese Lösung wurde unter anderem wie folgt charakterisiert:

| | |
|---|---|
| Na | < 3 ppm |
| K | < 1 ppm |
| Ca | < 1 ppm |
| Mg | < 1 ppm |
| Sulfat | < 1 ppm |
| Chlorid | < 1 ppm |

### Beispiel 4 (zum Vergleich)

Analog zu Beispiel 3 wurde kommerziell verfügbares 98 Gew.-% Lithiumfluorid der Fa. Alfa Aesar eingesetzt. Dieses Lithiumfluorid wies einen D10-Wert von 0,43 µm und einen D50-Wert von 4,9 µm auf. Die Schüttdichte betrug 0,65 g/cm³. Der Versuch wurde nach wenigen Minuten abgebrochen, da ein massiver Austrag von Lithiumfluorid beobachtet wurde, der die in Strömungsrichtung gelegenen Leitungen zunehmend verstopfte.

### Beispiel 5 (zum Vergleich)

Analog zu Beispiel 3 wurde kommerziell verfügbares 99 Gew.-% Lithiumfluorid der Fa. Sigma-Aldrich eingesetzt. Dieses Lithiumfluorid wies einen D10-Wert von 2,3 µm und einen D50-Wert von 370 µm auf. Die Schüttdichte betrug 0,65 g/cm³. Der Versuch wurde ebenfalls nach wenigen Minuten abgebrochen, da ein massiver Austrag von Lithiumfluorid beobachtet wurde, der die in Strömungsrichtung gelegenen Leitungen zunehmend verstopfte.

## Patentansprüche

1. Verfahren zur Herstellung von Lithiumfluorid umfassend zumindest die Schritte:
a) Bereitstellung eines wässrigen Mediums enthaltend gelöstes Lithiumcarbonat, wobei das zur Bereitstellung eingesetzte feste Lithiumcarbonat einen Reinheitsgrad von 98,0 bis 99,8 Gew.-% bezogen auf das wasserfreie Produkt besitzt
b) Umsetzung des gemäß a) bereitgestellten wässrigen Mediums mit gasförmigem Fluorwasserstoff zu einer wässrigen Suspension von festem Lithiumfluorid,
c) Abtrennung des festen Lithiumfluorids aus der wässrigen Suspension,
d) Trocknung des abgetrennten Lithiumfluorids.

2. Verfahren nach Anspruch 1, **dadurch gekennzeichnet, dass** das wässrige Medium enthaltend gelöstes Lithiumcarbonat mindestens 2,0 g/l, bevorzugt 7,2 bis 15,4 g/l Lithiumcarbonat enthält.

3. Verfahren nach Anspruch 1 oder 2, **dadurch gekennzeichnet, dass** das wässrige Medium enthaltend gelöstes Lithiumcarbonat einen Gewichtsanteil von mindestens 50 Gew.-% an Wasser, vorzugsweise 80 Gew.-%, besonders bevorzugt mindestens 90 Gew.-% bezogen auf das Gesamtgewicht des flüssigen Mediums enthält.

4. Verfahren nach einem der Ansprüche 1 bis 3, **dadurch gekennzeichnet, dass** das wässrige Medium enthaltend gelöstes Lithiumcarbonat als weitere Komponente einen Komplexbildner enthält, vorzugsweise in einer Menge von 0,001 bis 1 Gew.-%, vorzugsweise 0,005 bis 0,2 Gew.-% bezogen auf das Gesamtgewicht des wässrigen Mediums enthaltend gelöstes Lithiumcarbonat.

5. Verfahren nach einem der Ansprüche 1 bis 4, **dadurch gekennzeichnet, dass** die Bereitstellung des wässrigen Mediums enthaltend gelöstes Lithiumcarbonat so erfolgt, dass festes Lithiumcarbonat mit einem lithiumcarbonat-freien oder lithiumcarbonat-armen wässrigen Medium in Kontakt gebracht wird, so dass das feste Lithiumcarbonat zumindest teilweise in Lösung geht.

6. Verfahren nach einem der Ansprüche 1 bis 5, **dadurch gekennzeichnet, dass** das bereitgestellte wässrige Medium enthaltend gelöstes Lithiumcarbonat einen pH-Wert von 8,5 bis 12,0, vorzugsweise von 9,0 bis 11,5 gemessen oder berechnet auf 20°C und 1013 hPa aufweist.

7. Verfahren nach einem der Ansprüche 1 bis 6, **dadurch gekennzeichnet, dass** das gemäß Schritt a) bereitgestellte wässrige Medium enthaltend gelöstes Lithiumcarbonat vor seinem Einsatz in Schritt b) über einen Ionentauscher geleitet wird, um insbesondere Calcium- und Magnesiumionen zumindest teilweise zu entfernen.

8. Verfahren nach einem der Ansprüche 1 bis 7, **dadurch gekennzeichnet, dass** die Umsetzung gemäß Schritt b) durch Einleiten oder Überleiten eines gasförmigen Fluorwasserstoff enthaltenen Gasstromes in oder über das wässrige Medium enthaltend gelöstes Lithiumcarbonat erfolgt oder durch Versprühen, Vernebeln oder Durchfließen des wässrigen Mediums enthaltend gelöstes Lithiumcarbonat in oder durch ein Gas enthaltend gasförmigen Fluorwasserstoff.

9. Verfahren nach einem der Ansprüche 1 bis 8, **dadurch gekennzeichnet, dass** die Umsetzung gemäß Schritt b) derart erfolgt, dass die resultierende wässrige Suspension von festem Lithiumfluorid einen pH-Wert von 3,5 bis 8,0, vorzugsweise 4,0 bis 7,5 und besonders bevorzugt 5,0 bis 7,2 erreicht.

10. Verfahren nach einem der Ansprüche 5 bis 9, **dadurch gekennzeichnet, dass** die Schritte a) bis d) ein- oder mehrfach wiederholt werden und das zur Bereitstellung des wässrigen Mediums enthaltend gelöstes Lithiumcarbonat verwendete lithiumcarbonatfreie oder lithiumcarbonatarme wässrige Medium das wässrige Medium ist, dass in einem vorangegangenen Schritt c) bei der Abtrennung des festen Lithiumfluorids aus der wässrigen Suspension gewonnen wurde.

11. Verfahren nach einem der Ansprüche 1 bis 10, **dadurch gekennzeichnet, dass** es so geführt wird, dass ein Umsetzungsgrad von 95 % oder mehr erreicht wird.

## Claims

1. Process for preparing lithium fluoride, comprising at least the steps of:
a) providing an aqueous medium comprising dissolved lithium carbonate, where the solid lithium carbonate used for the provision has a purity level of 98.0 to 99.8% by weight based on the anhydrous product,
b) reacting the aqueous medium provided in a) with gaseous hydrogen fluoride to give an aqueous suspension of solid lithium fluoride,
c) separating the solid lithium fluoride from the aqueous suspension,
d) drying the separated lithium fluoride.

2. Process according to Claim 1, **characterized in that** the aqueous medium comprising dissolved lithium carbonate contains 2.0 g/l, preferably 7.2 to 15.4 g/l of lithium carbonate.

3. Process according to Claim 1 or 2, **characterized in that** the aqueous medium comprising dissolved lithium carbonate contains a proportion by weight of at least 50% by weight of water, preferably 80% by weight, more preferably at least 90% by weight, based on the total weight of the liquid medium.

4. Process according to any of Claims 1 to 3, **characterized in that** the aqueous medium comprising dissolved lithium carbonate comprises, as a further component, a complexing agent, preferably in an amount of 0.001 to 1% by weight, preferably 0.005 to 0.2% by weight, based on the total weight of the aqueous medium comprising dissolved lithium carbonate.

5. Process according to any of Claims 1 to 4, **characterized in that** the aqueous medium comprising dissolved lithium carbonate is provided by contacting solid lithium carbonate with an aqueous medium which is free of lithium carbonate or low in lithium carbonate, such that the solid lithium carbonate goes at least partly into solution.

6. Process according to any of Claims 1 to 5, **characterized in that** the aqueous medium comprising dissolved lithium carbonate provided has a pH of 8.5 to 12.0, preferably of 9.0 to 11.5, measured or calculated at 20°C and 1013 hPa.

7. Process according to any of Claims 1 to 6, **characterized in that** the aqueous medium comprising dissolved lithium carbonate provided in step a), before being used in step b), is passed over an ion exchanger in order to at least partly remove calcium and magnesium ions in particular.

8. Process according to any of Claims 1 to 7, **characterized in that** the reaction in step b) is effected by introducing or passing a gas stream comprising gaseous hydrogen fluoride into or over the aqueous medium comprising dissolved lithium carbonate, or by spraying or nebulizing the aqueous medium comprising dissolved lithium carbonate, or causing it to flow, into or through a gas comprising gaseous hydrogen fluoride.

9. Process according to any of Claims 1 to 8, **characterized in that** the reaction in step b) is effected in such a way that the resulting aqueous suspension of solid lithium fluoride attains a pH of 3.5 to 8.0, preferably 4.0 to 7.5 and more preferably 5.0 to 7.2.

10. Process according to any of Claims 5 to 9, **characterized in that** steps a) to d) are repeated once or more than once, and the aqueous medium which is free of lithium carbonate or low in lithium carbonate and is used to provide the aqueous medium comprising dissolved lithium carbonate is the aqueous medium which has been obtained in a preceding step c) in the separation of the solid lithium fluoride from the aqueous suspension.

11. Process according to any of Claims 1 to 10, **characterized in that** it is conducted so as to attain a conversion level of 95% or more.

## Revendications

1. Procédé de fabrication de fluorure de lithium, comprenant au moins les étapes suivantes :
a) la préparation d'un milieu aqueux contenant du carbonate de lithium dissous, le carbonate de lithium solide utilisé pour la préparation présentant un degré de pureté de 98,0 à 99,8 % en poids, par rapport au produit anhydre,
b) la mise en réaction du milieu aqueux préparé selon a) avec du fluorure d'hydrogène gazeux pour former une suspension aqueuse de fluorure de lithium solide,
c) la séparation du fluorure de lithium solide de la suspension aqueuse,
d) le séchage du fluorure de lithium séparé.

2. Procédé selon la revendication 1, **caractérisé en ce que** le milieu aqueux contenant du carbonate de lithium dissous contient au moins 2,0 g/l, de préférence 7,2 à 15,4 g/l, de carbonate de lithium.

3. Procédé selon la revendication 1 ou 2, **caractérisé en ce que** le milieu aqueux contenant du carbonate de lithium dissous contient une proportion en poids d'au moins 50 % en poids d'eau, de préférence 80 % en poids, de manière particulièrement préférée d'au moins 90 % en poids, par rapport au poids total du milieu liquide.

4. Procédé selon l'une quelconque des revendications 1 à 3, **caractérisé en ce que** le milieu aqueux contenant du carbonate de lithium dissous contient en tant que composant supplémentaire un complexant, de préférence en une quantité de 0,001 à 1 % en poids, de préférence de 0,005 à 0,2 % en poids, par rapport au poids total du milieu aqueux contenant du carbonate de lithium dissous.

5. Procédé selon l'une quelconque des revendications 1 à 4, **caractérisé en ce que** la préparation du milieu aqueux contenant du carbonate de lithium dissous a lieu de telle sorte que du carbonate de lithium solide est mis en contact avec un milieu aqueux exempt de carbonate de lithium ou pauvre en carbonate de lithium, de telle sorte que le carbonate de lithium solide passe au moins partiellement en solution.

6. Procédé selon l'une quelconque des revendications 1 à 5, **caractérisé en ce que** le milieu aqueux préparé contenant du carbonate de lithium dissous présente un pH de 8,5 à 12,0, de préférence de 9,0 à 11,5, mesuré ou calculé à 20 °C et 1 013 hPa.

7. Procédé selon l'une quelconque des revendications 1 à 6, **caractérisé en ce que** le milieu aqueux contenant du carbonate de lithium dissous préparé selon l'étape a) est acheminé sur un échangeur d'ions avant son utilisation dans l'étape b), afin d'éliminer au moins partiellement notamment les ions calcium et magnésium.

8. Procédé selon l'une quelconque des revendications 1 à 7, **caractérisé en ce que** la mise en réaction selon l'étape b) a lieu par introduction ou passage d'un courant gazeux contenant du fluorure d'hydrogène gazeux dans ou sur le milieu aqueux contenant du carbonate de lithium dissous, ou par pulvérisation, nébulisation ou passage du milieu aqueux contenant du carbonate de lithium dissous dans ou au travers d'un gaz contenant du fluorure d'hydrogène gazeux.

9. Procédé selon l'une quelconque des revendications 1 à 8, **caractérisé en ce que** la mise en réaction selon l'étape b) a lieu de telle sorte que la suspension aqueuse de fluorure de lithium solide résultante atteigne un pH de 3,5 à 8,0, de préférence de 4,0 à 7,5, et de manière particulièrement préférée de 5,0 à 7,2.

10. Procédé selon l'une quelconque des revendications 5 à 9, **caractérisé en ce que** les étapes a) à d) sont répétées à une ou plusieurs reprises, et le milieu aqueux exempt de carbonate de lithium ou pauvre en carbonate de lithium utilisé pour la préparation du milieu aqueux contenant du carbonate de lithium dissous est le milieu aqueux qui a été obtenu lors d'une étape c) précédente lors de la séparation du fluorure de lithium solide de la suspension aqueuse.

11. Procédé selon l'une quelconque des revendications 1 à 10, **caractérisé en ce qu'**il est réalisé de telle sorte qu'un degré de conversion de 95 % ou plus soit atteint.
